# EUROPEAN PATENT APPLICATION

(11) **EP 4 549 138 A1**
(43) Date of publication of application: **07.05.2025**
(21) Application number: 23386109.5
(22) Date of filing: 03.11.2023
(51) Int. Cl.: B29D 99/00, B29C 70/16, B64D 11/00, B64D 11/02, B64D 11/04, B29L 31/30

(54) **AIRCARFT INTERIOR MONUMENT**

(71) Applicant: B/E Aerospace Inc., Winston Salem, NC 27105 (US)
(72) Inventor: BLACKWOOD, Andrew W, Ormeau, Belfast BT7 3HD (GB); TRANAKIDIS, Pavlos, Newcastle BT33 0FB (GB); BALLOCCHI, Paolo, Dundrum BT33 0RH (GB)
(74) Representative: Dehns

(57) **Abstract**

A monument (2) for an aircraft including a fibre-reinforced polymer body (4). The fibre-reinforced polymer body (4) includes corrugations (6) configured to reinforce the monument (2).

## Description

### Technical field

This disclosure relates to an aircraft monument having a fibre-reinforced polymer body. In particular, the disclosure relates to a having a fibre-reinforced polymer body with additional reinforcements.

### Background Art

Monuments are provided on board aircraft to provide a variety of functions. These monuments are typically formed from flat sections of material having a central honeycomb layer sandwiched between two panels. These flat sections of material are typically joined together and reinforced using external metallic fittings. This increases the overall weight of the monument and adds an additional step in manufacturing and assembling the monument. Furthermore, the flat shape of these sections of material places limitations on the overall shape of the monument. The present disclosure aims to address some of these problems by providing a monument for an aircraft.

### Summary of the Disclosure

According to the present disclosure, there is provided a monument for an aircraft, comprising:
a fibre-reinforced polymer body;
wherein the fibre-reinforced polymer body comprises corrugations configured to reinforce the monument.

The monument may be a functional unit of any type that can be placed on board an aircraft. The monument may provide any function on the aircraft. For example, the monument may provide one or more of: a storage space, a divider wall, a seating area, a (e.g. suspended) wall and/or a (e.g. lowered or suspended) ceiling of an aircraft. For example, the monument may form at least part of one or more of the following structures of an aircraft: a bulkhead, a galley, a closet, a lavatory, a seat ottoman, a partition, a bar unit and/or a (e.g. lowered or suspended) ceiling.

The fibre-reinforced polymer body may have any suitable and desired shape and size. The shape and/or size of the unit may be determined at least in part by its desired function and/or by its intended location in the aircraft.

The fibre-reinforced polymer body may form the main portion of the monument. That is, the fibre-reinforced polymer body may provide a substantial portion of the structure of the monument (e.g. in terms of the volume, the weight and/or the strength of the monument).

The corrugations may comprise raised portions alternating with recessed portions. In some examples, the corrugations are raised and recessed relative to a surface of the monument, such that when viewed from a side of the surface of the monument the corrugations form a wave-like pattern. However, it will be understood that the corrugations may be any shape. For example, the corrugations may have one or more of the following shapes: square, rectangular, triangular, trapezoidal, hexagonal, hemispherical and/or sinusoidal (e.g. when viewed from a side (or in a cross section) of the surface of the monument).

The corrugations may be formed as at least part of the shaping of the fibre-reinforced polymer body. That is, the fibre-reinforced polymer body itself (e.g. as part or a whole) forms the corrugations (e.g. in a region of the fibre-reinforced polymer body). Therefore, in some examples, references to the shape and/or direction of a surface of the fibre-reinforced polymer body may refer to the overall shape and/or direction of (e.g. at least part of) the fibre-reinforced polymer body (e.g. in the region surrounding the corrugations), as the corrugations themselves form part of the surface of the fibre-reinforced polymer body. In some examples, references to the shape and/or direction of a surface of the fibre-reinforced polymer body may refer to the shape and/or direction that (e.g. at least part of) the fibre-reinforced polymer body would form without corrugations.

The corrugations may be raised and recessed in a direction substantially perpendicular to a surface of the fibre-reinforced polymer body. For example, in regions where the fibre-reinforced polymer body is substantially planar (e.g. forming a plane in the x-y plane), the corrugations may extend outwardly from that plane (e.g. in the z-direction). When viewed from a side of the substantially planar surface (e.g. along the x or y direction) the corrugations may form a wave-like pattern. However, it will be understood that the corrugations may be located in any region of the fibre-reinforced polymer body, not only in locations where the fibre-reinforced body is substantially planar.

In some examples, the corrugations are located on a curved surface of the fibre-reinforced polymer body. In these examples, a direction perpendicular to the surface of the monument may be considered to be a direction perpendicular to a tangent of the surface (e.g. in the region of the corrugations).

The surface of the fibre-reinforced polymer body may be taken to be the overall shape of the fibre-reinforced polymer body or a shape of a portion of the fibre-reinforced polymer body. For example, for a cube-shaped fibre-reinforced polymer body, corrugations located on different faces of the cube may extend in different directions. In this example, the corrugations may be raised and recessed relative to the face of the cube on which they are located.

The corrugations may be placed in any location on the monument. In some examples, the corrugations are placed in locations on the monument that are likely to be subject to higher levels of stress when the monument is in use. These areas may be determined by structural analysis of the monument, e.g. using a computer model of the monument and the forces that may be exerted upon it during use.

The number, location, orientation, size and/or shape of (e.g. each of) the corrugations may be chosen in order to provide the desired or required level of reinforcement to the monument (e.g. based on the structural analysis of the monument). In some examples, each of the corrugations has the same shape, size and/or orientation. In some examples, at least some of the corrugations have a different shape, size and/or orientation. Any number of corrugations may be used. Corrugations may be provided in several different (e.g. non-overlapping) regions of the monument.

In some examples, the corrugations may help to reduce bending out of plane (e.g. of a surface) of the monument. In some examples, the corrugations may help to reduce twisting of (e.g. a surface of) the monument.

In some examples, a portion of the fibre-reinforced polymer body comprises additional plies of fibre-reinforced polymer configured to reinforce the monument. Any suitable and desired proportion of the fibre-reinforced polymer body may comprise additional plies of fibre-reinforced polymer.

In some examples, the fibre-reinforced polymer body comprises a plurality of portions comprising additional plies of fibre-reinforced polymer configured to reinforce the monument. In some examples, one or more (e.g. all) of the portions comprising additional plies at least partially overlap with one or more of the other portions comprising additional plies. One or more (e.g. all) of the plurality of portions comprising additional plies may be separate (i.e. non-overlapping portions).

The portion(s) comprising additional plies may be placed in locations on the monument that are likely to be subject to higher levels of stress when the monument is in use. These areas may be determined by structural analysis of the monument, e.g. using a computer model of the monument and the forces that may be exerted upon it during use. The number of portions, location, number of additional plies, size and/or shape of (e.g. each of) the portions comprising additional plies may be chosen in order to provide the desired or required level of reinforcement to the monument (e.g. based on the structural analysis of the monument).

The portion(s)s of the fibre-reinforced polymer body that comprises additional plies may comprise any number of additional plies. In some examples, the portion(s) of the monument that comprises additional plies of fibre-reinforced polymer comprises at least three additional plies, optionally at least four additional plies, optionally at least five additional plies.

In examples where the fibre-reinforced polymer body comprises a plurality of portions comprising additional plies, one or more (e.g. each) of the portions may comprise a different number of additional plies from the other portion(s). The portions of the monument requiring greater reinforcement may comprise a greater number of additional plies.

In some examples, the monument further comprises at least one elongate reinforcement member configured to reinforce the monument.

The elongate reinforcement member(s) may be placed in any location on the monument. In some examples, the at least one elongate reinforcement member is placed in at least one location on the monument that is likely to be subject to higher levels of stress when the monument is in use. The at least one location may be determined by structural analysis of the monument, e.g. using a computer model of the monument and the forces that may be exerted upon it during use. The number, location, orientation, size and/or shape of (e.g. each of) the elongate reinforcement members may be chosen in order to provide the desired or required level of reinforcement to the monument (e.g. based on the structural analysis of the monument).

The at least one elongate reinforcement member may be any suitable and desired shape. In some examples, the at least one elongate reinforcement member has substantially larger dimensions along its elongate axis than along its other two (mutually perpendicular) axes. This may help to ensure that the at least one elongate reinforcement member is configured to reinforce the monument while also helping to ensure that the monument is lightweight.

The at least one elongate reinforcement member may be oriented such that the elongate axis is oriented along a direction that is likely to be subject to higher levels of stress when the monument is in use. In some examples, the elongate axis of the at least one elongate reinforcement member is substantially parallel to the direction of (at least some of) the fibres of the fibre-reinforced polymer body.

In some examples, the at least one elongate reinforcement member is a blade. The elongate reinforcement member may narrow to a point at at least one of its ends. In some examples, the elongate reinforcement member narrows to a point at both of its ends (e.g. at ends separated along the elongate axis). This may help to ensure that force is transmitted between the elongate reinforcement member and the fibre-reinforced polymer body.

The at least one elongate member may have any shape in a plane perpendicular to its elongate axis. For example, the elongate member may have any one of the following shapes in a cross-sectional plane perpendicular to its elongate axis: an I-shape, a J-shape, a C-shape and/or a top-hat shape.

The elongate reinforcement member(s) may be formed of any suitable and desired material. The elongate reinforcement member(s) may be formed from a fibre-reinforced polymer. The elongate reinforcement member(s) may be formed from the same fibre-reinforced polymer as the body of the monument.

The elongate reinforcement member(s) may be formed as part of the fibre-reinforced polymer body. For example, the elongate reinforcement member(s) may be laminated as part of the fibre-reinforced polymer body and cured as part of it (e.g. co-cured). The elongate reinforcement member(s) may be pre-cured separately from the fibre-reinforced polymer body and then bonded as part of the fibre-reinforced polymer body curing process (e.g. co-bonded). The elongate reinforcement member(s) may be pre-cured and bonded to the cured fibre-reinforced polymer body (e.g. secondary bonded).

In some examples, the at least one elongate reinforcement member is at least partially embedded in the fibre-reinforced polymer body. This may help to ensure that force is transmitted between the at least one elongate reinforcement member and the fibre-reinforced polymer body.

The at least one elongate reinforcement member may be embedded in the fibre-reinforced polymer body to any extent. In some examples, the at least one elongate reinforcement member is completely embedded in the fibre-reinforced polymer body. For example, the at least one elongate reinforcement member may be completely encased in the polymer of the body. In some examples, the at least one elongate reinforcement member extends at least partially outside the polymer of the body.

In some examples, the at least one elongate reinforcement member is located between two adjacent plies of the fibre-reinforced polymer. This may help to ensure that the at least one elongate reinforcement member is completely embedded in the fibre-reinforced polymer body. This may help to ensure that force is transmitted between the at least one elongate reinforcement member and the fibre-reinforced polymer body.

In examples of the monument with a plurality of elongate reinforcement members, each of said reinforcement members may be embedded in the fibre-reinforced polymer body to a different extent.

In some examples, the at least one elongate reinforcement member is substantially planar. This may help to ensure that the at least one reinforcement member is suitable for being at least partially embedded in the fibre-reinforced polymer (e.g. by being located between two adjacent plies of the fibre-reinforced polymer).

In some examples, the fibres of the fibre-reinforced polymer are unidirectional fibres; and
an elongate axis of the at least one elongate reinforcement member is substantially parallel to the direction of the fibres of the fibre-reinforced polymer body.

As the at least one elongate reinforcement member and the fibres of the fibre-reinforced polymer body are configured to provide reinforcement to the monument, it may be that they are required to provide reinforcement along the same direction (e.g. a direction that is likely to be subject to higher levels of stress when the monument is in use).

The elongate reinforcement member(s) may be formed separately to the fibre-reinforced polymer body, and attached to said body after curing. The elongate reinforcement member(s) may be attached to the fibre-reinforced polymer body by any means (e.g. by an adhesive and/or by one or more fastening means).

In some examples, the fibre-reinforced polymer body comprises a convex portion (e.g. when viewed from the outside of the body). In some examples, the fibre-reinforced polymer body comprises a plurality of convex portions.

The convex portion(s) may (e.g. each) have any shape, size, location and/or orientation. The convex portion(s) may be configured to conform to a curved (e.g. concave) interior surface of the aircraft. For example, the fibre-reinforced polymer body may comprise one or more convex portions that conform to the shape of a curved inner wall of an aircraft cabin. This may help to ensure that the available space (i.e. volume) inside the cabin is used effectively. For example, if the monument is configured for storage, this may help to increase the space (i.e. volume) available for storing items within the monument. This may be particularly advantageous for use on an aircraft, where space is limited.

In some examples, the monument is substantially formed from fibre-reinforced polymer. In some examples, the monument is formed from at least 70% fibre-reinforced polymer by volume, optionally at least 80% fibre-reinforced polymer by volume, optionally at least 90% fibre-reinforced polymer by volume, optionally 100% fibre-reinforced polymer by volume.

In some examples, the monument comprises components formed from materials other than fibre-reinforced polymer. However, these components may have a much smaller volume than the volume of the fibre-reinforced polymer body. Components not formed from fibre-reinforced polymer may be attached to the fibre-reinforced polymer body in any suitable and desired way. For example, these components may be at least partially embedded in the monument (e.g. such that they are present during curing of the fibre-reinforced polymer body) or they may be attached to the fibre-reinforced polymer body after curing (e.g. by an adhesive and/or a fixing member).

For example, the monument may comprise one or more metallic members. In some examples, the one or more metallic members are configured to reinforce the monument. In some examples, the one or more metallic members are configured for attaching the monument to a surface of the aircraft and/or for attaching a component to the monument.

The fibre-reinforced polymer may be any suitable and desired material. Fibre-reinforced polymer may help to form a monument having high strength and low weight, which may be particularly desirable for use on an aircraft. In some examples, the fibre-reinforced polymer is carbon fibre-reinforced polymer.

In some examples, the fibres of the fibre-reinforced polymer are unidirectional fibres. The fibres may be oriented along the same direction throughout the entire monument, or the fibres may be oriented along different directions in different regions of the monument. In some examples, the unidirectional fibres of the fibre-reinforced polymer are configured to reinforce the monument. For example, the unidirectional fibres may be oriented along direction(s) in which the monument is likely to experience high stress during use. This direction (or plurality of directions) may be determined by structural analysis of the monument, e.g. using a computer model of the monument and the forces that may be exerted upon it during use.

According to a second aspect of the present disclosure, there is provided a method of forming a monument for an aircraft, comprising the steps of:
layering plies of fibre-reinforced polymer in a mould;
curing the fibre-reinforced polymer to form a fibre-reinforced polymer body; and
removing the fibre-reinforced polymer body from the mould;
wherein the mould is shaped such that the fibre-reinforced polymer body comprises corrugations configured to reinforce the monument.

The plies of fibre-reinforced polymer may be placed into the mould in any suitable and desired way. For example, the plies of fibre-reinforced polymer may be placed into the mould by hand or by an (e.g. automated) machine. The polymer may be pre-impregnated into the plies (of fibre) or applied after (e.g. each of) the plies are placed into the mould.

The fibre-reinforced polymer may be cured in any suitable and desired way. For example, the fibre-reinforced polymer may be cured by: applying heat, air curing, vacuum-bagging, autoclaving and/or compression moulding.

The mould may be any suitable and desired type. In some examples, the mould may be lined or coated in a material to aid removal of the fibre-reinforced polymer body from the mould.

In some examples, the step of layering plies of fibre-reinforced polymer in a mould comprises:
layering additional plies of fibre-reinforced polymer in a portion of the mould, such that a portion of the fibre-reinforced polymer body comprises additional plies of fibre-reinforced polymer configured to reinforce the monument.

The additional plies of material may be placed into the mould in any suitable and desired way. For example, the plies of fibre-reinforced polymer may be placed into the mould by hand or by an (e.g. automated) machine.

In some examples, the step of layering plies of fibre-reinforced polymer in a mould comprises:
at least partially embedding at least one elongate reinforcement member in the fibre-reinforced polymer, such that the at least one elongate reinforcement member is configured to reinforce the monument.

The at least one elongate reinforcement member may be placed in between plies of the fibre-reinforced polymer in the mould or on top of the outermost ply of fibre-reinforced polymer, such that it is at least partially encased in the polymer before the fibre-reinforced polymer is cured. As such, the at least one elongate reinforcement member may be present during the curing process, and at least partially embedded in the fibre-reinforced polymer body once it has been cured.

### Brief Description of the Drawings

Certain examples of the present disclosure will now be described with reference to the accompanying drawings in which:
Figure 1 is a perspective view of a monument for an aircraft in accordance with an example of the present disclosure;
Figure 2 is an enlarged perspective view of a first part of a monument for an aircraft in accordance with an example of the present disclosure;
Figure 3a is an enlarged plan view of a second part of a monument for an aircraft in accordance with an example of the present disclosure;
Figure 3b is a cross-sectional view along line A-A shown in Figure 3a;
Figure 3c is a cross-sectional view along line B-B shown in Figure 3a;
Figure 4 is an enlarged perspective view of a third part of a monument for an aircraft in accordance with an example of the present disclosure; and
Figure 5 is a flow chart showing a method of forming a monument for an aircraft in accordance with an example of the present disclosure.

### Detailed Description

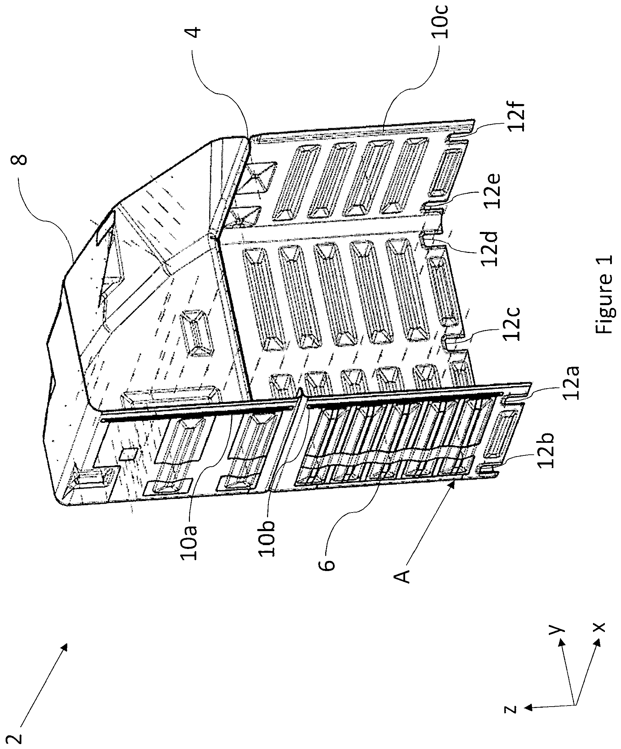

Figure 1 is a perspective view of a monument 2 for an aircraft according to an example of the present disclosure.

It will be understood that monuments may be used for a wide variety of functions on board an aircraft and as such the monument 2 may have any suitable and desired shape and size. In this example, the monument 2 is configured to be used as a storage unit in a cabin of an aircraft. The monument 2 may also be used as a divider wall in a cabin of an aircraft.

The monument 2 includes a fibre-reinforced polymer body 4. The fibre-reinforced polymer may be any suitable and desired type. In some examples, the fibre-reinforced polymer is carbon fibre. In some examples, the fibres of the fibre-reinforced polymer are unidirectional fibres. The unidirectional fibres of the fibre-reinforced polymer may be oriented such that they provide reinforcement to the monument 2.

The fibre-reinforced polymer body 4 comprises corrugations 6 configured to reinforce the monument 2. For clarity, only one corrugation 6 is labelled on Figure 1. However, it will be understood that in this example, the monument 2 includes a number of corrugations 6.

The corrugations 6 include raised portions alternating with recessed portions. The corrugations 6 are raised and recessed relative to a surface of the monument 2, such that when viewed from a side of the monument 2 the corrugations form a wave-like pattern.

For example, a surface of the monument 2 of this example is labelled A. Excluding the corrugations 6, the surface A extends in a substantially planar manner in the x-z plane. The corrugations 6 are raised and recessed relative to the surface A along the y axis, such that when viewed from side of the surface A, along the x-y plane, the corrugations 6 form a wave-like pattern.

The corrugations 6 may be placed in any location on the monument 2. In some examples, the corrugations 6 are placed in locations on the monument 2 that are likely to be subject to higher levels of stress when the monument 2 is in use. These areas may be determined by structural analysis of the monument 2, e.g. using a computer model of the monument 2 and the forces that may be exerted upon it during use. The number, location, orientation, size and/or shape of (e.g. each of) the corrugations 4 may be chosen in order to provide the desired or required level of reinforcement to the monument 2 (e.g. based on the structural analysis of the monument 2).

In this example, the fibre-reinforced polymer body 4 comprises a convex portion 8. In examples of the monument 2 that include a convex portion 8, the convex portion 8 may be any suitable and desired shape and size. In this example, the convex portion 8 is configured to conform to the curved interior walls of a cabin of an aircraft. This may help to increase the interior volume of the monument 2, by using all of the space available inside the cabin of the aircraft. This may be advantageous in some applications, for example when the monument 2 is configured to be used for storage.

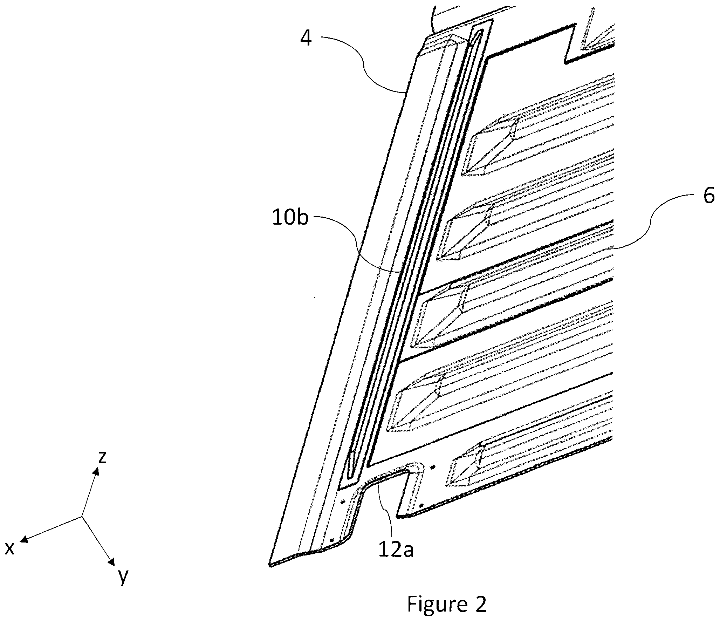

In this example, the monument 2 further includes elongate reinforcement members 10a-c configured to reinforce the monument. The elongate reinforcement members 10a-c are at least partially embedded in the fibre-reinforced polymer body 4. The elongate reinforcement members 10a-c will be discussed in more detail in relation to Figure 2.

In this example, the monument 2 further includes a plurality of apertures 12a-f (see Figure 1). The plurality of apertures 12a-f may be configured to receive at least one fixing member (e.g. a screw, a bolt and/or a bracket) for attaching the monument 2 to a surface inside an aircraft. In some examples, the plurality of apertures 12a-f may be configured to provide the points at which the monument 2 may be attached to a floor of the cabin of an aircraft.

In some examples, the fibre-reinforced polymer body 4 comprises additional reinforcement proximal to each of the plurality of apertures 12a-f. The additional reinforcement may be one or more of additional plies of fibre-reinforced polymer, corrugations and/or at least one elongate reinforcement member.

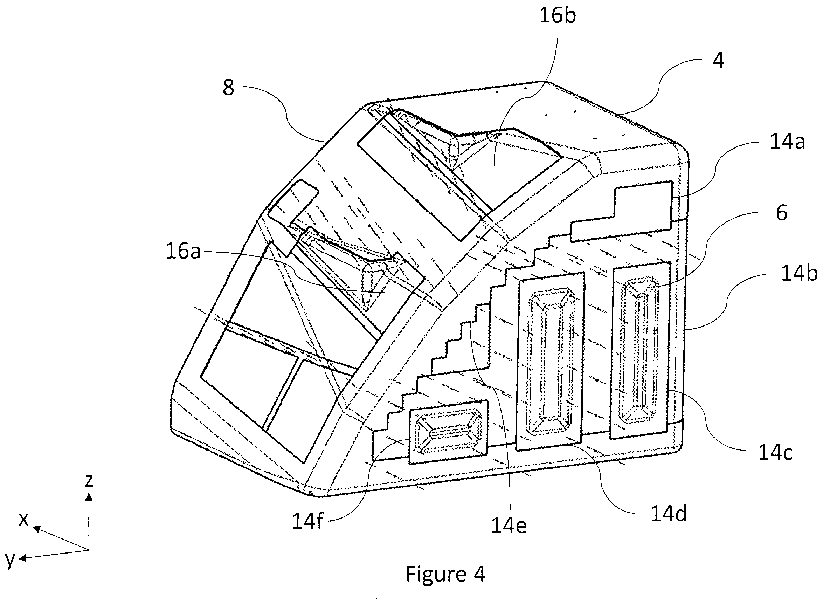

In some examples, the monument 2 may additionally or alternatively include shaping to help facilitate attachment of the monument 2 to a surface of the aircraft. This feature will be discussed in more detail in relation to Figure 4.

It will be understood that the monument 2 may include apertures and/or shaping in any suitable and desired location on the monument 2. The number, location, orientation, size and/or shape of (e.g. each of) the apertures and/or of the shaping will be dependent on the requirements for attaching the monument 2 to a surface inside an aircraft.

In this example, the monument 2 is substantially formed from fibre-reinforced polymer. The volume of fibre-reinforced polymer in the monument 2 is significantly larger than the volume of other materials in the monument 2. This may be advantageous owing to the low density and high strength of fibre-reinforced polymer. The monument 2 is able to maintain a high level of strength while maintaining low weight when it is substantially formed from fibre-reinforced polymer.

Figure 2 is an enlarged perspective view of a first part of a monument 2 for an aircraft according to an example of the present disclosure. The part of the monument 2 shown in Figure 2 is an enlarged part of the monument of Figure 1, showing the elongate reinforcement member 10b, along with other features. The features in relation to the elongate reinforcement member 10b may apply equally to any of the elongate reinforcement members 10a-c of the monument 2.

The elongate reinforcement members 10a-c may be placed in any location on the monument 2. In some examples, the elongate reinforcement members 10a-c are placed in locations on the monument 2 that are likely to be subject to higher levels of stress when the monument 2 is in use. These areas may be determined by structural analysis of the monument 2, e.g. using a computer model of the monument 2 and the forces that may be exerted upon it during use. The number, location, orientation, size and/or shape of (e.g. each of) the elongate reinforcement members 10a-c may be chosen in order to provide the desired or required level of reinforcement to the monument 2 (e.g. based on the structural analysis of the monument 2).

In some examples, the elongate reinforcement members 10a-c may be oriented such that their elongate axis is oriented along a direction that is likely to be subject to higher levels of stress when the monument 2 is in use. In some examples, the elongate axis of the at least one elongate reinforcement member 10a-c is substantially parallel to the direction of the fibres of the fibre-reinforced polymer body 4. As the at least one elongate reinforcement member 10a-c and the fibres of the fibre-reinforced polymer body 4 are configured to provide reinforcement to the monument 2, it may be that they are required to provide reinforcement along the same direction (e.g. a direction that is likely to be subject to higher levels of stress when the monument 2 is in use).

it can also be seen in Figure 2 that the elongate reinforcement member 10b has substantially larger dimensions along its elongate axis than along its other two (mutually perpendicular) axes. In this example, the elongate reinforcement member 10b has substantially larger dimensions along the z axis than along the x and y axis. This may help to ensure that the elongate reinforcement member 10b is configured to reinforce the monument 2 while also helping to ensure that the monument 2 is lightweight.

The elongate reinforcement member 10b may be at least partially embedded in the fibre-reinforced polymer body 4. This may help to ensure that forces are transferred between the elongate reinforcement members 10b and the fibre-reinforced polymer body 4. In some examples, the elongate reinforcement member 10b is completely embedded in the fibre-reinforced polymer 4. For example, the elongate reinforcement member 10b may be located between two adjacent plies of the fibre-reinforced polymer.

It can be seen in Figure 2 that the elongate reinforcement member 10b is substantially planar. In particular, the elongate reinforcement member 10b is substantially planar in the x-z plane. In this example, this may help to ensure that the elongate reinforcement member 10b can be at least partially embedded in the fibre-reinforced polymer body 4, as the portion of the fibre-reinforced polymer body 4 in which the elongate reinforcement member 10b is located is also substantially planar in the x-z plane.

In this example, the elongate reinforcement member 10b is a blade. That is, the elongate reinforcement member 10b narrows to a point at at least one of its ends. In this example, the elongate reinforcement member 10b narrows to a point at both of its ends. This may help to ensure that force is transmitted between the elongate reinforcement member 10b and the fibre-reinforced polymer body 4.

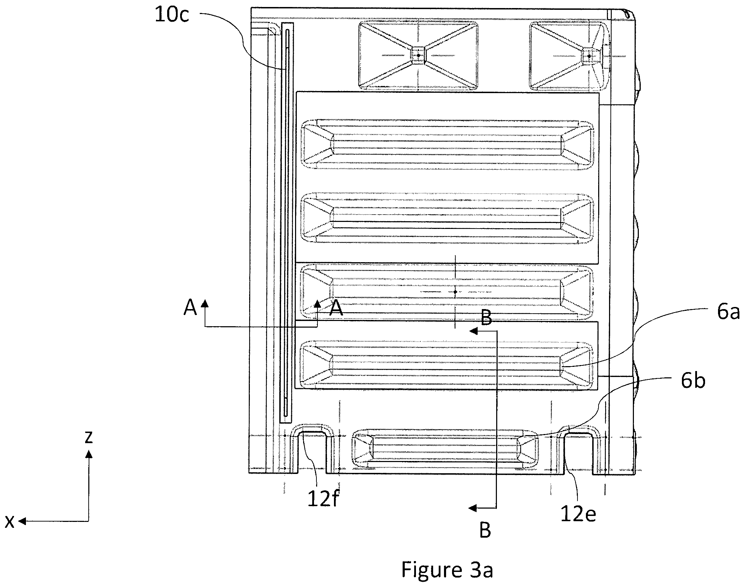

Figure 3a is an enlarged plan view of a second part of a monument 2 for an aircraft according to an example of the present disclosure. The part of the monument 2 shown in Figure 3a is an enlarged part of the monument of Figure 1, showing the elongate reinforcement member 10c, along with other features. The features in relation to the elongate reinforcement member 10c may apply equally to any of the elongate reinforcement members 10a-c of the monument 2. The plan view of Figure 3a is in the x-z plane.

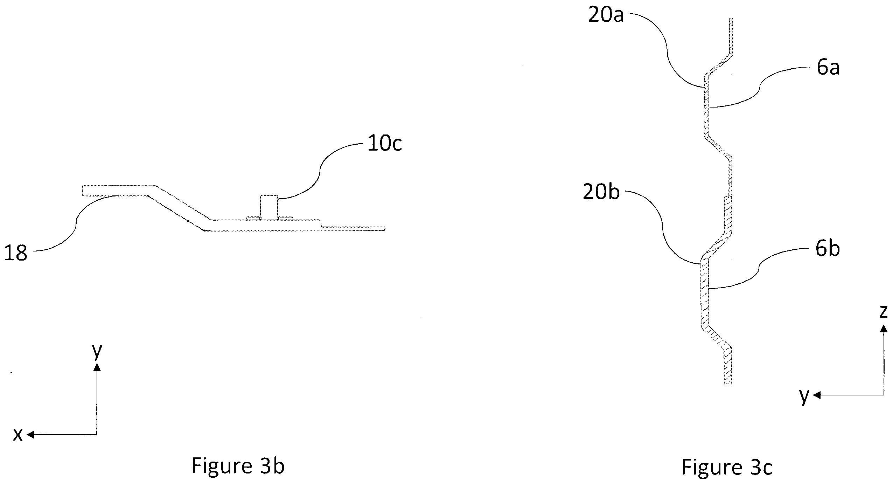

Figure 3b is a cross-sectional view along line A-A shown in Figure 3a. The cross-sectional view of Figure 3b is in the x-y plane. Here it can be seen that the elongate reinforcement member 10c has a T-shaped cross-section. This may help to ensure that the elongate reinforcement member 2 has a large surface area in contact with the fibre-reinforced polymer body 4, which may help to ensure that forces are transmitted effectively between the elongate reinforcement member 10c and the fibre-reinforced polymer body 4.

The elongate reinforcement member 10c may be in any suitable and desired position relative to the fibre-reinforced polymer body 4. However, in this example, it can also be seen that the elongate reinforcement member 10c is positioned on a surface of the fibre-reinforced polymer body 4, such that the elongate reinforcement member 10c forms part of the outer surface of this portion of the monument 2.

Furthermore, it can be seen in Figure 3b that the edge of the monument 2 has a lip 18. The lip 18 may be any suitable and desired shape. In this example, the lip 18 is raised (e.g. compared to the rest of the surface of the fibre-reinforced polymer body 4). In some example, the lip 18 may form part of a joggle, which may be used to connect the monument 2 to another structure of the aircraft and/or to increase the strength of the monument 2. The monument 2 may include any number of lips 18. In some examples, each of the edges of the monument 2 may have a lip 18.

Figure 3c is a cross-sectional view along line B-B shown in Figure 3a. The cross-sectional view of Figure 3c is in the y-z plane. Here the corrugations 6a, 6b of Figure 3a can be seen from the side of the monument 2.

The corrugations 6a, 6b include raised portions alternating with recessed portions. The corrugations 6a, 6b are raised and recessed relative to a surface of the monument 2, such that when viewed from a side of the monument 2 the corrugations form a wave-like pattern.

In this example, the corrugations 6a, 6b are each formed from a planar raised portion connected to a planar recessed portion by a sloping portion. However, the corrugations 6 may have any suitable and desired shape.

It can also be seen in Figure 3c that the thickness of the fibre-reinforced polymer body 4 varies along the length of the section shown in Figure 3c. In particular, the portion 20a has a greater thickness than the portion 20b. This may be due to the portion 20a having additional plies compared to the portion 20b. This will be discussed in more detail in relation to Figure 4.

Figure 4 is an enlarged perspective view of a third part of a monument 2 for an aircraft according to an example of the present disclosure. The part of the monument 2 shown in Figure 4 is an enlarged part of the monument of Figure 1, showing the convex portion 8, along with other features. The features described in relation to this enlarged part of the monument 2 may apply equally to any of the other parts of the monument 2.

In Figure 4, it can be seen that a plurality of portions 14a-f of the fibre-reinforced polymer body 4 comprises additional plies of fibre-reinforced polymer configured to reinforce the monument 2. In this example, some of portions 14a-f having additional plies at least partially overlap with some of the other portions 14a-f having additional plies. In this example, one of the portions 14b partially overlaps with all of the other portions 14a, 14c-f.

The portions 14a-f having additional plies may be placed in locations on the monument 2 that are likely to be subject to higher levels of stress when the monument 2 is in use. These areas may be determined by structural analysis of the monument 2, e.g. using a computer model of the monument 2 and the forces that may be exerted upon it during use. The number of portions, location, number of additional plies, size and/or shape of (e.g. each of) the portions 14a-f having additional plies may be chosen in order to provide the desired or required level of reinforcement to the monument 2 (e.g. based on the structural analysis of the monument 2).

In this example, each of the portions 14a-f having additional plies may have a different number of additional plies. In some examples, the portions of the monument 2 requiring greater reinforcement may include a greater number of additional plies. The portions 14a-f of the monument having additional plies may include at least three additional plies, optionally at least four additional plies, optionally at least five additional plies. However, it will be understood that any suitable and desired number of additional plies may be used.

In this example, the monument 2 includes shaping to help facilitate attachment of the monument 2 to a surface of the aircraft. In this example, two portions 16a, 16b of the monument are shaped in this manner. These portions 16a, 16b may be configured to be connected to an attachment member (e.g. a bolt, a screw and/or a bracket), which is further arranged to be connected to a surface of the aircraft. The shape of these portions 16a, 16b may be configured such that forces are transmitted effectively between the surface of the aircraft and the monument 2 (e.g. based on the direction in which force is likely to be transmitted when the monument 2 is in use). Additionally or alternatively, the shape of these portions 16a, 16b may be configured such that the attachment members are conveniently located and/or oriented to facilitate installation of the monument 2 into the aircraft.

The monument 2 of Figures 1, 2 and 3 may be formed as a single unitary structure. In particular, the fibre-reinforced polymer body 4 including the corrugations 6, the convex portion 8 and the at least one elongate reinforcement member 10 are formed as one single structure. For example, these components may all be at least partially encapsulated in the polymer and/or all these components may be present when the structure is cured.

The monument 2 being formed as a single unitary structure may help to ensure that forces are transmitted effectively across the monument 2. This may help to increase the strength of the monument 2 without increasing its weight. This is particularly advantageous for use of the monument 2 on an aircraft, where it is normally desirable to reduce the weight of components on board the aircraft, in order to decrease the amount of fuel used. This may also be particularly advantageous for use of the monument 2 on an aircraft, as the monument 2 may be subject to high forces (e.g. during take-off and landing).

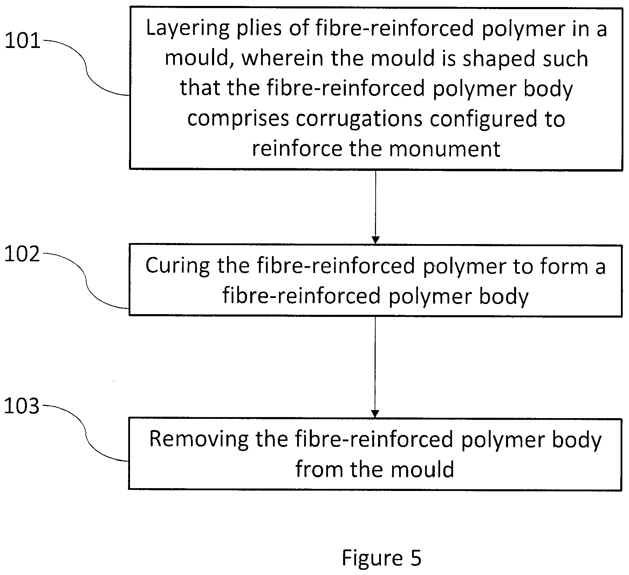

Figure 5 is a flow chart showing a method of forming a monument for an aircraft according to an example of the present disclosure. The method includes the steps of: layering plies of fibre-reinforced polymer in a mould (101), curing the fibre-reinforced polymer to form a fibre-reinforced polymer body (102) and removing the fibre-reinforced polymer body from the mould (103). The mould is shaped such that the fibre-reinforced polymer body 4 comprises corrugations 6 configured to reinforce the monument 2.

The use of a fibre-reinforced polymer body may help to facilitate corrugations in the monument and/or one or more convex portions of the monument. First, the fibre-reinforced polymer may be readily moulded to many shapes, including those having a convex portion and/or corrugations. Second, the fibre-reinforced polymer may maintain high strength even when it is shaped (e.g. to form the convex portion(s) and/or corrugations).

## Claims

1. A monument for an aircraft, comprising:
a fibre-reinforced polymer body;
wherein the fibre-reinforced polymer body comprises corrugations configured to reinforce the monument.

2. A monument as claimed in claim 1, wherein a portion of the fibre-reinforced polymer body comprises additional plies of fibre-reinforced polymer configured to reinforce the monument.

3. A monument as claimed in claim 1 or 2, wherein the monument further comprises:
at least one elongate reinforcement member configured to reinforce the monument;
wherein the at least one elongate reinforcement member is at least partially embedded in the fibre-reinforced polymer body.

4. A monument as claimed in claim 3, wherein the at least one elongate reinforcement member is substantially planar.

5. A monument as claimed in claim 3 or 4, wherein the at least one elongate reinforcement member is located between two adjacent plies of the fibre-reinforced polymer.

6. A monument as claimed in claim 3, 4 or 5, wherein the at least one elongate reinforcement member is a blade.

7. A monument as claimed in any one of claims 3 to 6, wherein the fibres of the fibre-reinforced polymer are unidirectional fibres; and
wherein an elongate axis of the at least one elongate reinforcement member is substantially parallel to the direction of the fibres of the fibre-reinforced polymer body.

8. A monument as claimed in any one of the preceding claims, wherein the fibre-reinforced polymer body comprises a convex portion.

9. A monument as claimed in any one of the preceding claims, wherein the monument is substantially formed from fibre-reinforced polymer.

10. A monument as claimed in any one of the preceding claims, wherein the monument is formed from at least 70% fibre-reinforced polymer by volume, optionally at least 80% fibre-reinforced polymer by volume, optionally at least 90% fibre-reinforced polymer by volume, optionally 100% fibre-reinforced polymer by volume.

11. A monument as claimed in any one of the preceding claims, wherein the fibre-reinforced polymer is carbon fibre-reinforced polymer.

12. A monument as claimed in any one of the preceding claims, wherein the fibres of the fibre-reinforced polymer are unidirectional fibres.

13. A method of forming a monument for an aircraft, comprising the steps of:
layering plies of fibre-reinforced polymer in a mould;
curing the fibre-reinforced polymer to form a fibre-reinforced polymer body; and
removing the fibre-reinforced polymer body from the mould;
wherein the mould is shaped such that the fibre-reinforced polymer body comprises corrugations configured to reinforce the monument.

14. A method as claimed in claim 13, wherein the step of layering plies of fibre-reinforced polymer in a mould comprises:
layering additional plies of fibre-reinforced polymer in a portion of the mould, such that a portion of the fibre-reinforced polymer body comprises additional plies of fibre-reinforced polymer configured to reinforce the monument.

15. A method as claimed in claim 13 or 14, wherein the step of layering plies of fibre-reinforced polymer in a mould comprises:
at least partially embedding at least one elongate reinforcement member in the fibre-reinforced polymer, such that the at least one elongate reinforcement member is configured to reinforce the monument.
